# EUROPEAN PATENT SPECIFICATION

(11) **EP 0 744 357 B1**
(45) Date of publication and mention of the grant of the patent: **11.10.2000**
(21) Application number: 95108056.3
(22) Date of filing: 26.05.1995
(51) Int. Cl.: B65D 83/08

(54) **Package for tissues comprising a flexible pouch and a re-usable dispensing device**
Einen flexibelen Beutel und eine wiederverwendbare Abgabevorrichtung enthaltende Verpackung für Tücher
Emballage pour serviettes comportant un sachet flexible et un dispositif de distribution réutilisable

(43) Date of publication of application: 27.11.1996
(73) Proprietor: THE PROCTER & GAMBLE COMPANY, Cincinnati, Ohio 45202 (US)
(72) Inventor: Burke, Kim Marie, Derry, NewHampshire 03038 (US); Berg, Charles John, Cincinnati, Ohio45231 (US); Bauer, Rainer Richard Bernd, D-65191 Wiesbaden (DE); Bitowft, Bruce Kevin, D-61479 Glashütten (DE); Frank, Martin Werner, D-60316 Frankfurt (DE)
(74) Representative: Bottema, Johan Jan

(56) References cited:
- EP-A- 0 251 103
- EP-A- 0 331 027
- DE-U- 9 317 973
- US-A- 3 982 659
- US-A- 4 185 754
- US-A- 4 526 291

## Description

### Field of the Invention

The invention relates to a package comprising
- a flexible pouch containing a stack of tissues, the pouch comprising a top surface, a bottom surface, a side surface, a pre-formed first dispensing aperture in the top surface and a cover member covering the first dispensing aperture, and
- a relatively rigid re-usable dispensing devise comprising attachment means for releasable attachment to the pouch.

The invention also relates to the use of a re-usable dispensing device and of a flexible pouch for assembling such a package.

### Background of the Invention

A flexible package and a re-usable dispensing device are known from the European patent EP-B-0 251 103. In this document a flexible pouch is disclosed containing moist or wet wipes. The pouch comprises a pre-formed dispensing aperture and an adhesive label that is on one end permanently attached to the pouch, for repeatedly opening and closing of the pouch. To support the shape of the pouch, even when the pouch is almost empty, and to allow proper closure of the pouch's adhesive label, the pouch is connected to a shape-retaining member. The shape-retaining member may be in the form of a cardboard container or of a clamping frame fitting around the side surfaces and the top surface of the pouch.

The above system has as a disadvantage that the adhesive closure of the flexible pouch by the adhesive label, will not always be liquid-tight. When the pouch is transported, the pouch may be squeezed in the user's luggage or may be transported with the dispensing aperture in an upside-down position. Leakage through the aperture along the adhesive label may take place.

Furthermore, contamination (e.g. baby powder or lotion) can affect the adhesive properties. The known adhesive labels lose their adhesive properties when in contact with such substances.

Finally, a refastenable adhesive label requires a special attachment in order to permanently attach part of the label to the pouch, a refastenable adhesive and a release surface on the pouch from which the adhesive can easily be detached.

US-A.4 185 754 discloses a reclosable dispenser packet for products such as moist wipes, which comprises a flexible pouch and a semi-rigid cover closure to be opened/closed for providing access/protecting the contents. The cover closure is permanently attached to the pouch and so, there is still a need for such a package in which the dispensing cover closure can be reused. DE-U- 93 17973 discloses a flexible pouch with dispensing opening. The dispensing opening is composed of 2 parts, one located on the internal side of the pouch, and the other, on the external side of the pouch. Both parts cooperate so as to form the reclosable dispensing opening. However, there is still a need for a pouch comprising a dispensing opening which is made out of one part, and thus cheap to produce.

The objects of the present invention are to provide:
a flexible package comprising tissues and a reusable dispensing device that allows for easy dispensing and guarantees a reliable sealing of the pouch;
a flexible package comprising wet wipes and a reusable dispensing device that provides liquidtight sealing of the pouch;
a closure on a flexible pouch which is resistant to contamination;
a cost-effective and simply constructed pouch comprising tissues.

### Summary of Invention

The invention describes a package comprising a cover member which is completely detachable from a dispensing aperture in the pouch. The top surface of the pouch comprises a sealing area, which forms a substantially closed contour around the first dispensing aperture in the top surface of the pouch. A reusable dispensing device of relatively rigid material is provided that comprises:
- a base member having a second dispensing aperture,
- a connecting area which forms a seal with the sealing area on the top surface of the pouch and
- a closure member or lid that seals off the second dispensing aperture by forming a contact with the base member.

By providing a separate closure made of a rigid material on the dispensing device, comprising the base member, connecting area and closure member, where the dispensing device is attached to the dispensing aperture of the
flexible pouch, a proper sealing of the dispensing aperture in the pouch is achieved. As the cover member of the flexible pouch can be completely removed from the dispensing aperture in the pouch, this cover member can be of simple construction. In case the pouch comprises dry tissues, the cover member can be formed by a closed line of weakening in the top surface of the pouch. After removal of the cover member, the dispensing device seals the aperture and prevents dust or dirt from entering into the opened pouch. In case the dry tissues are scented, the closure formed by the dispensing device prevents the perfume of the tissues from evaporating.

In case the pouch comprises moist or wet tissues, the cover member comprises an adhesive label, which is completely removable form the pouch. In such a case, no special measures for permanently fixing one part of the label to the pouch are necessary. Furthermore, no refastenable adhesive needs be employed on the label of the pouch.

The rigid, non-adhesive nature of the dispensing device allows proper liquid-tight closure of the dispensing device which is not subject to contamination.

An embodiment of a package according to the invention comprises a flexible pouch having at least two slits through the top surface of the pouch in the vicinity of the first dispensing aperture. The slits are preferably covered by the cover member, such as the adhesive label, before use, and are uncovered on first-time use of the pouch. The dispensing device comprises two protrusions that extend generally in the direction of the top surface of the pouch upon insertion through the slits and for clampingly engaging the top surface of the pouch upon roation of the dispensing device. The dispensing device can be easily screwed into the flexible pouch to provide a sealing closure between the base member of the dispensing device and the pouch material.

Another embodiment of a package according to the invention comprises a dispensing device having a flange comprising an outer radius that extends beyond the perimeter of the dispensing aperture of the pouch after insertion therein. The flexible nature of the pouch will allow the flange of the dispensing device, despite its larger radius than the dispensing aperture, to be inserted into the dispensing aperture and to be retained therein. Preferably an annular ridge of similar dimensions as the dispensing aperture is attached to the flange and extends in a direction perpendicular to the top surface of the pouch. The annular ridge may comprise a circumferential groove for sealingly engaging with the edge of the dispensing aperture. The rigid annular ridge will frictionally engage with the towels upon dispensing and will help the towels to unfold when pulled from the package.

In again another package according to the invention, the dispensing device is formed by a generally U-shaped clamp comprising a lower member for engaging with the bottom surface of the pouch, a transverse member and the base member attached to the transverse member. Upon use, the pouch is clamped between the base member and the lower member. Due to the resilient clamping force of the U-shaped member, the base member of the dispensing device is sealingly engaged with the top surface of the pouch. Even when the caliper of the pouch is decreased upon emptying of the pouch, a sealing engagement of the base member with the top surface can be maintained. For this purpose, the transverse member may be proviced with a hinge to accommodate dimensional changes of the pouch upon dispensing of the wet wipes, or tissues, by allowing the lower member to approach the base member of the U-shaped dispensing device. The same effect can be obtained by providing an elastic member for contractively engaging with the bottom surface of the pouch.

In again another embodiment, the flexible pouch comprises a sealable slit in one of the side faces or the top face, through which a base plate of dispensing device can be inserted between the tissues and the top surface of the pouch. The dispensing device comprises a plug which, upon closing of the dispensing device, is inserted into the aperture in the top surface of the pouch and into the underlying aperture of the base plate. The top surface of the pouch is sealingly clamped between the plug and the base plate. Such a dispensing device can be easily applied to the pouch by a user.

In again another embodiment of a package according to the invention, the dispensing device forms a rigid, top-half of a container which has no bottom surface. The pouch material forms the flexible, lower half of this container.

For proper sealing, the sealing area of the pouch may be coated with a pressure sensitive adhesive for attaching the connecting area of the dispensing device in a sealing manner to the top surface of the pouch. Before use, the sealing area may be covered by the adhesive label which covers the dispensing aperture in the top surface of the pouch.

### Brief Description of the Drawings

The invention will be described in detail with reference to the accompanying drawings. In the drawings:
Figure 1 shows a perspective view of a package according to the invention prior to attachment of the dispensing device to the flexible pouch,
Figure 2 shows a perspective view of a package wherein the dispensing device is attached to the pouch,
Figure 3 shows a cross-sectional view of a package wherein the dispensing device comprises a flange and the pouch comprises a reinforcement layer,
Figure 4 shows an embodiment of a dispensing device having a rotating closure member,
Figure 5 shows an embodiment of a dispensing device having a sliding closure member,
Figure 6 shows a perspective view of a screw-type dispensing device,
Figure 7 shows a section of the top surface of the flexible pouch for attachment to a dispensing device as shown in figure 6,
Figure 8 shows a package wherein the pouch comprises a sealable slit in one of its side surfaces,
Figures 9 and 10 show a dispensing device covering the top surface and parts of the side surfaces of the flexible pouch, and
Figures 11 and 12 show a clamp-like dispensing device in a detached state and after attachment to the pouch, respectively.

### Detailed Description of the Invention

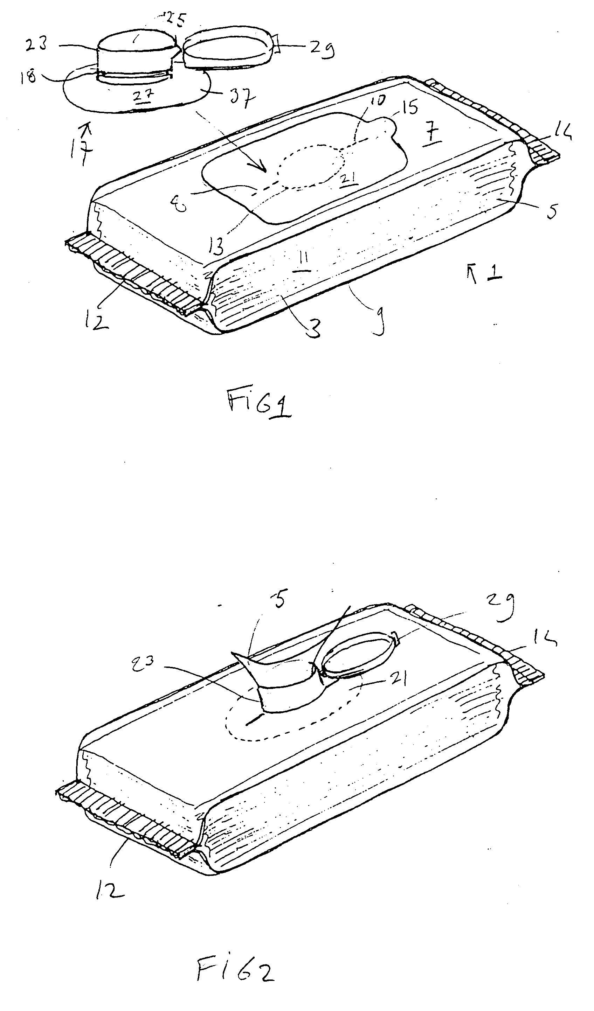

Figure 1 shows a package 1 comprising a flexible pouch 3 and a re-usable dispensing device 17. The flexible pouch 3 contains a stack of tissues, such as wet wipes 5, and is closed by a cover member which is formed in this case by an adhesive label 15. The adhesive label 15 overlies a pre-formed dispensing aperture 13 which may be formed by a cut or a line of weakening in the top surface 7 of the pouch 5. After opening of the pouch 5 by completely removing the label 15, the dispensing device 17 can be inserted in the dispensing aperture 13, as shown in figure 2. The wet wipes 5 can be dispensed through the dispensing device 17, which can be sealingly closed by the closure member 29.

The term "wet wipes" is intended to mean any tissues, towels or sheets of fibrous material having a moisture content of at least 50 % by weight. The fibers may be of natural origin, such as cellulosic fibers or may be synthetic fibers or combinations thereof. Preferred tissues comprise a blend of 50 % polypropylene and 50 % viscose fibers as available from Suominen (P.O. Box 25, 29251 Nakkila, Finland under the trade name Fibrella 3100G2.). The moisture contained in the tissue 5 may be a water based lotion comprising for instance 95 % by weight of water and comprising skin care components, stabilisers, cleaning agents and perfume.

The tissues in the pouch 3 may also be "dry" tissues, i.e. tissues which have moisture contents below 50 % by weight.
Instead of, or in addition to moisture, the tissues may be loaded with liquid or solid materials such as abrasive particles or furniture polish. The pouch 3 is made of a flexible material. The term "flexible" is intended to mean a sheet material which is deformed upon insertion of the dispensing device, by stretching or folding or otherwise giving way. Suitable sheet materials for making a flexible pouch are homogeneous films or laminates of Polyethylene, Polypropylene, Polyethylene terephtalate, Aluminum and combinations thereof, of a thickness between 12 and 100 microns. Flexible pouches 3 can be cheaply produced from a continuously moving web of pouch material by first cutting the pre-formed dispensing apertures 13 in the continuous web of material, then attaching the adhesive labels 15 over the pre-formed dispensing apertures, placing a stack of wet wipes on the web, folding the web along a longitudinal fold line into a tubular arrangement enwrapping the wipes. Thereafter a longitudinal seam is formed in the overlapping pouch material and the front and back side surfaces 12 and 14 are heat sealed and cut. In case the pouch contains dry tissues, the adhesive label can be omitted, the dispensing aperture being formed by a line of weakening or perforations in the pouch material.

The dispensing aperture 13 can be formed by a closed cut and by removing the pouch material inside the cut. In a preferred embodiment, the pouch material remains present inside the closed cut line, and is attached to the adhesive label 15. In this way, the adhesive surface of the label 15 does not touch the surface of the topmost wipe, and a liquid-tight sealing of the pouch before first time use is warranted. It is important that upon opening, only the pouch material within the dispensing aperture 13 is removed and that the pouch material in the vicinity of the dispensing aperture is not torn or damaged. The top surface of the pouch surrounding the dispensing aperture in this way forms a sealing area 21 for contacting the re-usable dispensing device. The term "sealing area" is intended to mean a substantially continuous area of the top surface of the pouch surrounding the dispensing aperture. A pair of cut lines 8 and 10 may be provided to facilitate insertion of the re-usable dispensing device 17.

A suitable adhesive on the label 15 is available from MacTac Europe S.A., Bd. Kennedy, B-7060 Soignies, Belgium under type number MacTac MP 318 and MacTac MR 980. The label 15 does not have any permanent attachment areas, such that it can easily be removed from the top surface 7 of the pouch 3. The label 15 may comprise an adhesive which upon removal of the label 15 remains attached to the sealing area of the top surface of the pouch such that a dispensing device can be attached to the adhesive for providing a sealing closure between the pouch material and the dispensing device.

The re-usable dispensing device 17 is relatively rigid. The term "rigid" is intended to mean that the shape of the dispensing device is substantially unaltered upon insertion of the device into the package and/or upon opening and closing of the device. However, more or less flexible parts may be provided on the dispensing device for ease of insertion of the device into the dispensing aperture of the pouch. For instance, the dispensing device may comprise a flexible flange of thin plastic or rubber, which deforms upon insertion into the pouch to return to its original shape after attachment. Suitable dispensing devices can be made from a large variety of materials such as polyethylene or polypropylene by injection moulding, blow moulding or thermo forming and can have a wall thickness of between 0.5 mm and 1.0 mm.

The dispensing device 17 comprises attachment means, which in this embodiment are formed by a flange 37 and a circumferential groove 18, for attaching the device 17 to the sealing area 21 of the pouch. The flange 37 can be inserted through the dispensing aperture, the sealing area of the pouch being formed by the inner face of the top surface 7 in the vicinity of the dispensing aperture 13. The flange 37 forms a connecting area 27 on the dispensing device which contacts the sealing area 21 of the pouch 3. The dispensing device 17 comprises a base member 23, which in this case is formed by an annular ridge having a circumferential groove 18 for sealingly engaging with the perimeter of the dispensing aperture 13. The dispensing aperture 25 in the base member 23 can be covered by a closure member 29, such as a flip top cap.

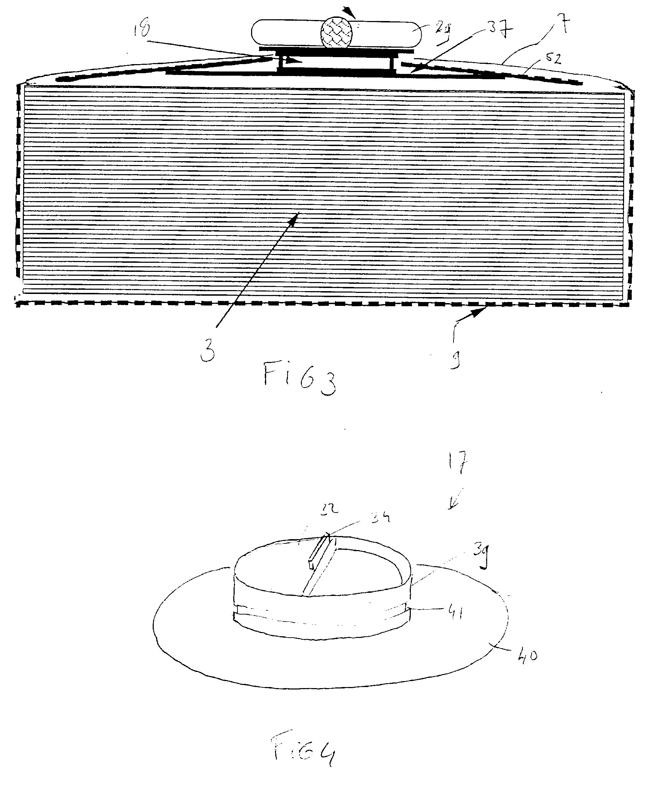

Figure 3 shows a cross-sectional view of an embodiment wherein a reinforcement layer, such as insert member 52 of relatively rigid material is located below the top surface 7 of the pouch 3. The insert member may be formed by a layer of polyethylene of a thickness of between 0.7 mm and 1 mm, and sealingly engages with the circumferential groove 18 in the annular ridge of base member 23.

Instead of using a flip top cap 29 in the embodiment of figure 3 as a closure for the dispensing device 17, a fixed cap may be employed and the flange 37 may be omitted. In this manner a plug is formed which, upon dispensing of a tissue, can be removed in its entirety from the reinforcement member 52.

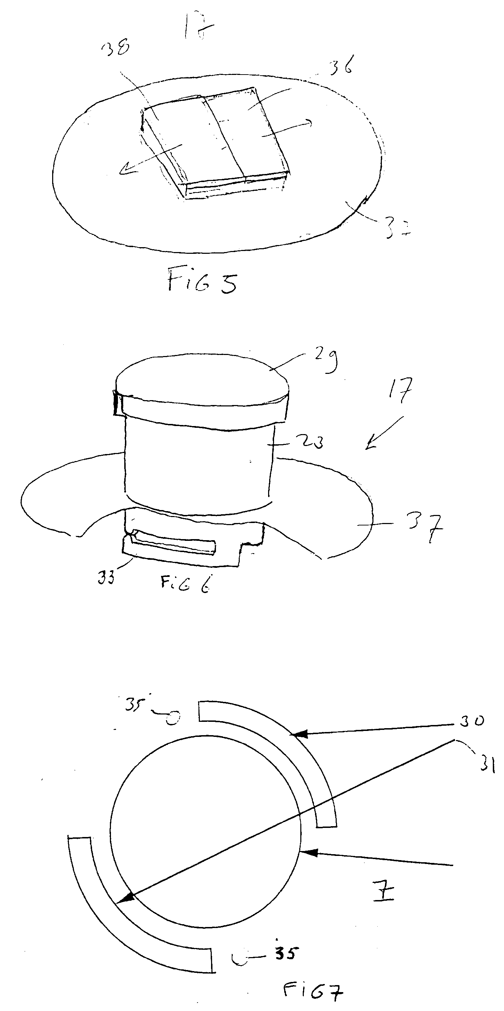

Figure 4 shows an embodiment wherein the closure member of the dispensing device 17 is formed by a rotatable member 32, located within the aperture of upstanding annular ridge 39. The member 32 can be rotated by operating a gripping notch 34. The dispensing device of figure 4 comprises a flange 40 and an annular groove 41.

Figure 5 shows a dispensing device 17 for engaging with a substantially rectangular dispensing aperture 13 in the top surface 7 of the pouch, and having two sliding closure members 36,38.

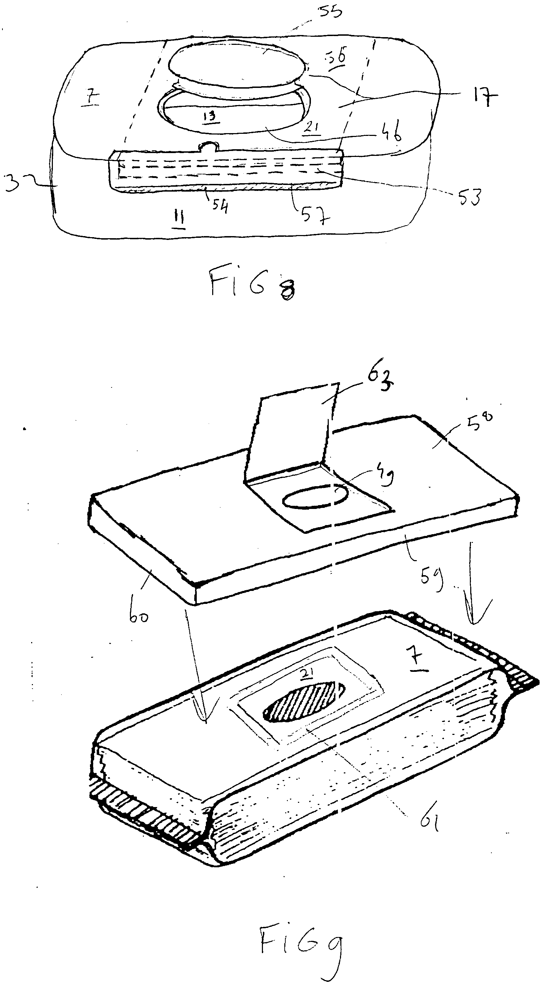

Figure 6 shows a dispensing device 17 comprising two protrusions 33 at the bottom of the base member 23. The protrusions 33 can be inserted into a pair of slits 30, 31 in the top surface 7 of the pouch, as shown in figure 7. Upon rotation of the dispensing device, the pouch material is clamped between the protrusions 33. The end part of each protrusion 33 may be provided with a notch which engages a hole 35 in the pouch for keeping the dispensing device 17 in a fixed position and for preventing the device 17 from becoming detached from the pouch 3.

Figure 8 shows a pouch 3 having a slit 53 in its side surface 11. The slit 53 is covered by an adhesive label 57, which is permanently attached to the side surface 11 along a line of fusion 54. The dispensing device 17 comprises a flat base plate 56 having a dispensing aperture, and a plug 55, fitting in the dispensing aperture. Upon first time use of the pouch 3, the dispensing aperture 13 is uncovered, the label 57 is pulled back from the slit 53 and the base plate 56 is inserted through the slit 53 between the topmost wet wipe and the top surface 7 of the pouch. After that, the slit 53 is reclosed. In this embodiment, the attachment means for the dispensing device 17 are formed by the relatively large top of the plug 55 and the base plate 56. Upon insertion of the plug 55 into the base plate 56, the pouch material in the sealing area of the pouch is clamped between the top of the plug 55 and the base plate 56.

In an alternative embodiment, the base plate 56 may be inserted through a slit in the top surface 7 of the pouch 3. Again alternatively, the base plate 56 may be a disposable base plate which has been inserted in the pouch 3 by the manufacturer, the re-usable dispensing device only comprising the re-usable plug 55.

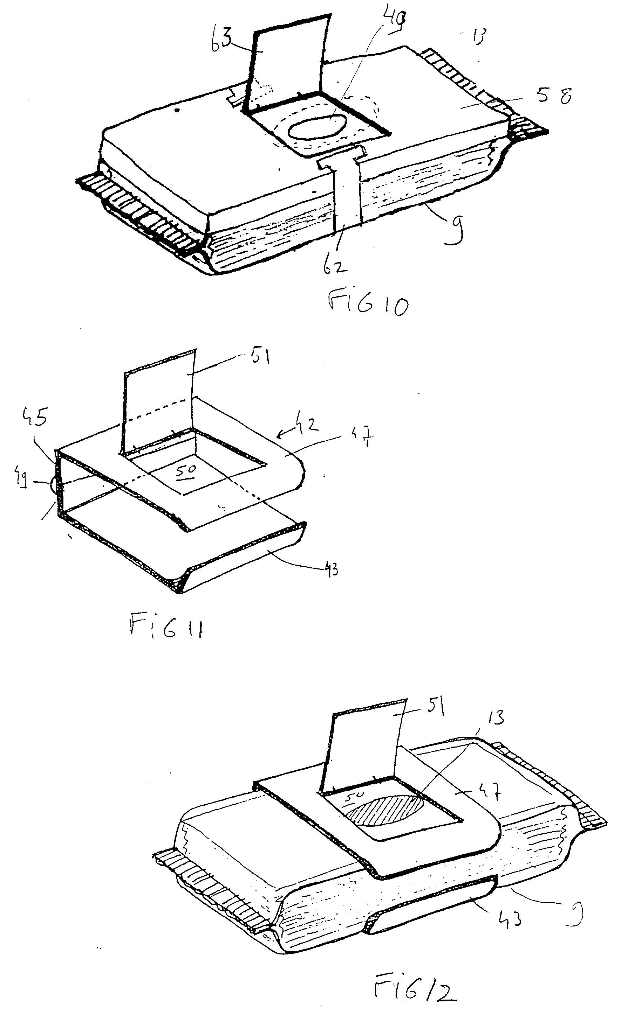

Figures 9 and 10 show an embodiment of a flexible pouch 3 according to the invention, wherein the dispensing device 17 is formed by a cover 58 which fits over the top surface 7 of the pouch 3. The sides 59, 60 of the cover 58 clamp the cover on the pouch and keep it in place. The sides 59, 60 may extend along the whole of the side surfaces of the pouch, such that the dispensing device forms the upper half of a rigid container, the bottom surface of the pouch forming the bottom half of the container. An adhesive area 61 may be located around the dispensing aperture 13 on the sealing area 21 of the pouch to sealingly contact the cover 58. A suitable adhesive is available from Findley Euro B.K., P.O. Box 180, 4700 AD Roosendaal, NL under type number H-4031. Alternatively, mechanical fasteners such as Velcro® material may be used instead of adhesive 61 if liquid-tightness of the seal is not essential. As shown in figure 10, an elastic member 62 may be connected to the cover 58 to maintain a sealing contact between the top surface 7 and the cover when the height of the pouch 3 decreases upon emptying thereof.

Figures 11 and 12 show a dispensing device 17 which is formed by a U-shaped clamp 42. The clamp 42 comprises a lower member 43 and the base member 47 which extend perpendicularly to the transverse member 45. The free ends of the members 43, 47 are slightly curved towards one another to fit around the pouch 3. The base member 47 and the lower member 43 are flexible, and can be separated to fit around the pouch 3, as shown in figure 12. The base member 47 comprises a lid 51, which can sealingly be closed over the dispensing aperture 13. The flexible nature of the clamp construction presses the base member 47 against the underlying sealing area of the top surface 7 of the pouch 3, such that a sealing closure between the base member 47 and the pouch 3 is achieved.

A suitable material for the clamp 42 is polypropylene, polystyrene or polyester. A hinge 49 may be provided in the U-shaped clamp.

## Claims

1. Package (1) comprising:
- a flexible pouch (3) containing a stack of tissues (5), the pouch comprising a top surface (7), a bottom surface (9), a side surface (11, 12, 14), a pre-formed first dispensing aperture (13) in the top surface and a cover member (15) covering the first dispensing aperture, and
- a relatively rigid re-usable dispensing device (17) comprising attachment means (18, 33, 35, 37, 40, 41, 43, 45, 47, 55, 56, 59, 60)for releasable attachment to the pouch,
characterised in that
the cover member (15) is completely removable from the first dispensing aperture (13),
the top surface (7) of the pouch comprises a sealing area (21), which sealing area forms a substantially closed contour around the first dispensing aperture (13),
the dispensing device (17) comprises
- a base member (23, 39, 47, 56, 58) having a second dispensing aperture (25, 46, 49, 50),
- a connecting area (27, 40, 47, 56, 58) for sealingly engaging the sealing area (21) of the pouch, and
- a closure member (29, 32, 36, 38, 51, 55, 63) for sealingly closing the second dispensing aperture (25, 46, 49, 50) by contacting the base member (23, 39, 47, 56, 58).

2. Package according to Claim 1 wherein the pouch comprises a stack of wet wipes, the cover member (15) comprising an adhesive label.

3. Package (1) according to claim 1 or 2 wherein the pouch (3) comprises at least two slits (30, 31) through the top surface (7) of the pouch in the vicinity of the first dispensing aperture (13), the slits being covered preferably by the cover member (15) before use, wherein the dispensing device (17) comprises two protrusions (33) that extend generally in the direction of the top surface (7) of the pouch after insertion through the slits (30, 31), and for clampingly engaging the top surface (7) of the pouch upon rotation of the dispensing device (17).

4. Package according to claim 1 or 2, wherein the dispensing device (17) comprises a flange (37, 40) comprising an outer radius extending beyond the edge of the first dispensing aperture (13) of the pouch (3) after insertion through the first dispensing aperture.

5. Package according to claim 4, wherein the base member of the dispensing device (17) comprises an upstanding annular ridge (23, 39) attached to the flange (37, 40), the ridge (23, 39) comprising a circumferential groove (18, 41) for receiving the edge of the first dispensing aperture (13).

6. Package according to claim 1 or 2, wherein the dispensing device (17) comprises a generally U-shaped clamp (42) comprising a lower member (43) for engaging with the bottom surface (9) of the pouch, a transverse member (45) and the base member (47) attached to the transverse member, the pouch (3) being clamped between the base member (47) and the lower member (43).

7. Package according to claim 6, wherein the transverse member (45) comprises a hinge (49) for adapting the distance between the lower member (43) and the base member (47).

8. Package according to any of the previous claims, wherein the pouch (3) comprises a reinforcement layer (52) located below the top surface (7) of the pouch which allows for release from the dispensing device (17); the reinforcement layer (52) comprising a further dispensing aperture which is coextensive with the first dispensing aperture (13) located in the top surface (7) of the pouch (3).

9. Package according to claim 1 or 2, wherein at least one of the surfaces (7,11,12,14) of the pouch comprises a slit (53) that can be sealed, where the base member (56) can be inserted between the wipes (5) and the top surface (7) of the pouch (3) through the slit (53).

10. Package according to claim 1 or 2, wherein the dispensing device comprises a base member (58) which has the same boundaries as the top surface (7) of the pouch and lateral sides (59, 60) which at least partly cover the side surfaces (11, 12, 14) of the pouch, where the dispensing device does not comprise a bottom surface that touches the bottom surface (9) of the pouch (3).

11. Package according to any of the previous claims, wherein the sealing area (21) of the pouch (3) comprises a layer of adhesive (61) surrounding the first dispensing aperture (13), for the purposes of sealing and enabling a release from the connecting area (27, 40, 47, 56, 58) of the dispensing device (17).

12. Package according to any of the previous claims, wherein the dispensing device comprises an elastic element (62) which is in contact with the bottom surface (9) of the pouch (3).

13. Use of a dispensing device (17) for assembling a package according to any of the previous claims, said dispensing device comprising a means of release from a flexible pouch, a base member (23) having a second dispensing aperture (25), connecting area (27) which forms a seal with the sealing area of the pouch, and a closure member (29) for closing the second dispensing aperture by forming a contact with the base member.

14. Use of a Flexible pouch (3) for assembling a package according to any of claims 1 to 10 where the pouch comprises a top surface (7), a pre-formed dispensing aperture (13) in the top surface and a cover member (15) covering the dispensing aperture, the cover member being completely removable from the dispensing aperture and a sealing area (21) forming a substantially closed contour around the dispensing aperture for releasable attachment to a substantially rigid dispensing device (17).

## Patentansprüche

1. Verpackung (1), mit:
- einem flexiblen Beutel (3), der einen Stapel von Tüchern (5) enthält, wobei der Beutel eine obere Oberfläche (7), eine untere Oberfläche (9), eine seitliche Oberfläche (11, 12, 14), eine vorgeformte erste Abgabeöffnung (13) in der oberen Oberfläche und ein die erste Abgabeöffnung abdeckendes Abdeckelement (15) umfaßt, und
- einer verhältnismäßig starren, wiederverwendbaren Abgabevorrichtung (17), die eine Befestigungseinrichtung (18, 33, 35, 37, 40, 41, 43, 45, 47, 55, 56, 59, 60) für die lösbare Befestigung des Beutels umfaßt,
dadurch gekennzeichnet, daß
das Abdeckelement (15) von der ersten Abgabeöffnung (13) vollständig abnehmbar ist,
die obere Oberfläche (7) des Beutels einen Dichtungsbereich (21) aufweist, der eine im wesentlichen geschlossene Außenlinie um die erste Abgabeöffnung (13) bildet, und
die Abgabevorrichtung (17) umfaßt:
- ein Basiselement (23, 39, 47, 56, 58) mit einer zweiten Abgabeöffnung (25, 46, 49, 50),
- einen Verbindungsbereich (27, 40, 47, 56, 58), der mit dem Dichtungsbereich (21) des Beutels in dichten Eingriff gelangen kann, und
- ein Verschlußelement (29, 32, 36, 38, 51, 55, 63) zum dichten Verschließen der zweiten Abgabeöffnung (25, 46, 49, 50) durch Herstellen eines Kontakts mit dem Basiselement (23, 39, 47, 56, 58).

2. Verpackung nach Anspruch 1, wobei der Beutel einen Stapel feuchter Wischtücher enthält und das Abdeckelement (15) ein Klebeetikett aufweist.

3. Verpackung (1) nach Anspruch 1 oder 2, wobei der Beutel (3) in der Nähe der ersten Abgabeöffnung (13) wenigstens zwei Schlitze (30, 31) durch die obere Oberfläche (7) des Beutels aufweist, wobei die Schlitze vor dem Gebrauch vorzugsweise durch das Abdeckelement (15) abgedeckt sind, wobei die Abgabevorrichtung (17) zwei Vorsprünge (33) umfaßt, die sich im allgemeinen in Richtung der oberen Oberfläche (7) des Beutels erstrecken, nachdem sie durch die Schlitze (30, 31) eingeschoben worden sind, um mit der oberen Oberfläche (7) des Beutels bei einer Drehung der Abgabevorrichtung (17) in Klemmeingriff zu gelangen.

4. Verpackung nach Anspruch 1 oder 2, wobei die Abgabevorrichtung (17) einen Flansch (37, 40) aufweist, der einen äußeren Radius besitzt, der sich über die Kante der ersten Abgabevorrichtung (13) des Beutels (3) hinaus erstreckt, nachdem er durch die erste Abgabeöffnung eingeschoben worden ist.

5. Verpackung nach Anspruch 4, wobei das Basiselement der Abgabevorrichtung (17) einen aufrechtstehenden, ringförmigen Steg (23, 39) aufweist, der am Flansch (37, 40) befestigt ist und eine Umfangsnut (18, 41) aufweist, die die Kante der ersten Abgabeöffnung (13) aufnimmt.

6. Verpackung nach Anspruch 1 oder 2, wobei die Abgabevorrichtung (17) eine im allgemeinen U-förmige Klemme (42) aufweist, die ein unteres Element (43) für einen Eingriff mit der unteren Oberfläche (9) des Beutels, ein transversales Element (45) und das am transversalen Element befestigte Basiselement (47) umfaßt, wobei der Beutel (3) zwischen dem Basiselement (47) und dem unteren Element (43) festgeklemmt wird.

7. Verpackung nach Anspruch 6, wobei das transversale Element (45) ein Scharnier (49) aufweist, um den Abstand zwischen dem unteren Element (43) und dem Basiselement (47) anzupassen.

8. Verpackung nach einem der vorhergehenden Ansprüche, wobei der Beutel (3) eine Verstärkungsschicht (52) aufweist, die sich unter der oberen Oberfläche (7) des Beutels befindet und die Freigabe der Abgabevorrichtung (17) zuläßt; wobei die Verstärkungsschicht (17) eine weitere Abgabeöffnung aufweist, die die gleichen Abmessungen wie die erste Abgabeöffnung (13) besitzt, welche sich in der oberen Oberfläche (7) des Beutels (3) befindet.

9. Verpackung nach Anspruch 1 oder 2, wobei wenigstens eine der Oberflächen (7, 11, 12, 14) des Beutels einen Schlitz (53) aufweist, der abgedichtet werden kann, wobei das Basiselement (56) durch den Schlitz (53) zwischen die Wischtücher (5) und die obere Oberfläche (7) des Beutels (3) eingeschoben werden kann.

10. Verpackung nach Anspruch 1 oder 2, wobei die Abgabevorrichtung ein Basiselement (58), das die gleichen Begrenzungen wie die obere Oberfläche (7) des Beutels besitzt, sowie Seiten (59, 60), die wenigstens teilweise die seitlichen Oberflächen (11, 12, 14) des Beutels abdecken, umfaßt, wobei die Abgabevorrichtung keine untere Oberfläche besitzt, die die untere Oberfläche (9) des Beutels (3) berührt.

11. Verpackung nach einem der vorhergehenden Ansprüche, wobei der Dichtungsbereich (21) des Beutels (3) eine die erste Abgabeöffnung (13) umgebende Klebstoffschicht (61) aufweist, um den Verbindungsbereich (27, 40, 47, 56, 58) der Abgabevorrichtung (17) abzudichten und seine Abnahme zu ermöglichen.

12. Verpackung nach einem der vorhergehenden Ansprüche, wobei die Abgabevorrichtung ein elastisches Element (62) enthält, das mit der unteren Oberfläche (9) des Beutels (3) in Kontakt ist.

13. Verwendung einer Abgabevorrichtung (17) für die Montage einer Verpackung nach einem der vorhergehenden Ansprüche, wobei die Abgabevorrichtung eine Einrichtung für die Abnahme von einem flexiblen Beutel, ein Basiselement (23) mit einer zweiten Abgabeöffnung (25), einen Verbindungsbereich (27), der mit dem Dichtungsbereich des Beutels eine Dichtung bildet, sowie ein Verschlußelement (29) zum Verschließen der zweiten Abgabeöffnung durch Bilden eines Kontakts mit dem Basiselement umfaßt.

14. Verwendung eines flexiblen Beutels (3) zur Montage einer Verpackung nach einem der Ansprüche 1 bis 10, wobei der Beutel eine obere Oberfläche (7), eine vorgeformte Abgabeöffnung (13) in der oberen Oberfläche und ein die Abgabeöffnung abdeckendes Abdeckelement (15) umfaßt, wobei das Abdeckelement von der Abgabeöffnung vollständig abnehmbar ist und ein Dichtungsbereich (21) eine im wesentlichen geschlossene Außenlinie um die Abgabeöffnung bildet, um an einer im wesentlichen starren Abgabevorrichtung (17) abnehmbar befestigt zu werden.

## Revendications

1. Conditionnement (1) comprenant :
- un sachet flexible (3) contenant une pile de papiers tissus (5), le sachet comprenant une surface supérieure (7), une surface inférieure (9), une surface latérale (11, 12, 14), un premier orifice de distribution préformé (13) dans la surface supérieure et un élément formant couvercle (15) recouvrant le premier orifice de distribution, et
- un dispositif de distribution (17) relativement rigide réutilisable comprenant des moyens de fixation (18, 33, 35, 37, 40, 41, 43, 45, 47, 55, 56, 59, 60) en vue d'une fixation libérable au sachet,
caractérisé en ce que
l'élément formant couvercle (15) peut être complètement retiré du premier orifice de distribution (13),
la surface supérieure (7) du sachet comprend une zone d'étanchéité (21), laquelle zone d'étanchéité forme un contour sensiblement fermé autour du premier orifice de distribution (13),
le dispositif de distribution (17) comprend :
- un élément de base (23, 39, 47, 56, 58) ayant un deuxième orifice de distribution (25, 46, 49, 50),
- une zone de liaison (27, 40, 47, 56, 58) destinée à venir en prise de manière étanche avec la zone d'étanchéité (21) du sachet, et
- un élément de fermeture (29, 32, 36, 38, 51, 55, 63) destiné à fermer de manière étanche le deuxième orifice de distribution (25, 46, 49, 50) en venant en contact avec l'élément de base (23, 39, 47, 56, 58).

2. Conditionnement selon la revendication 1, dans lequel le sachet comprend une pile de serviettes humides, l'élément formant couvercle (15) comprenant une étiquette adhésive.

3. Conditionnement (1) selon l'une des revendications 1 ou 2, dans lequel le sachet (3) comprend au moins deux fentes (30, 31) à travers la surface supérieure (7) du sachet, à proximité du premier orifice de distribution (13), les fentes étant recouvertes, de préférence, par l'élément formant couvercle (15) avant utilisation, dans lequel le dispositif de distribution (17) comprend deux saillies (33) qui s'étendent globalement dans la direction de la surface supérieure (7) du sachet après introduction à travers les fentes (30, 31), et destinées à venir en prise par serrage avec la surface supérieure (7) du sachet lors d'une rotation du dispositif de distribution (17).

4. Conditionnement selon l'une des revendications 1 ou 2, dans lequel le dispositif de distribution (17) comprend un rebord (37, 40) comprenant un rayon extérieur s'étendant au-delà du bord du premier orifice de distribution (13) du sachet (3) après introduction à travers le premier orifice de distribution.

5. Conditionnement selon la revendication 4, dans lequel l'élément de base du dispositif de distribution (17) comprend une arête annulaire verticale (23, 39) fixée au rebord (37, 40), l'arête (23, 39) comprenant une rainure circonférentielle (18, 41) destinée à recevoir le bord du premier orifice de distribution (13).

6. Conditionnement selon l'une des revendications 1 ou 2, dans lequel le dispositif de distribution (17) comprend une agrafe (42) globalement en forme de U comprenant un élément inférieur (43) destiné à venir en prise avec la surface inférieure (9) du sachet, un élément transversal (45) et l'élément de base (47) fixé à l'élément transversal, le sachet (3) étant serré entre l'élément de base (47) et l'élément inférieur (43).

7. Conditionnement selon la revendication 6, dans lequel l'élément transversal (45) comprend une charnière (49) destinée à adapter la distance entre l'élément inférieur (43) et l'élément de base (47).

8. Conditionnement selon l'une quelconque des revendications précédentes, dans lequel le sachet (3) comprend une couche de renforcement (52) située sous la surface supérieure (7) du sachet, qui permet un dégagement à partir du dispositif de distribution (17) ; la couche de renforcement (52) comprenant un autre orifice de distribution qui coïncide approximativement avec le premier orifice de distribution (13) situé sur la surface supérieure (7) du sachet (3).

9. Conditionnement selon l'une des revendications 1 ou 2, dans lequel au moins une des surfaces (7, 11, 12, 14) du sachet comprend une fente (53) qui peut être étanche, où l'élément de base (56) peut être introduit entre les serviettes (5) et la surface supérieure (7) du sachet (3) à travers la fente (53).

10. Conditionnement selon l'une des revendications 1 ou 2, dans lequel le dispositif de distribution comprend un élément de base (58) qui a les mêmes limites que la surface supérieure (7) du sachet, et des côtés latéraux (59, 60) qui recouvrent au moins partiellement les surfaces latérales (11, 12, 14) du sachet, où le dispositif de distribution ne comprend pas une surface inférieure qui touche la surface inférieure (9) du sachet (3).

11. Conditionnement selon l'une quelconque des revendications précédentes, dans lequel la zone d'étanchéité (21) du sachet (3) comprend une couche d'adhésif (61) entourant le premier orifice de distribution (13) à des fins d'étanchéité et pour permettre un dégagement à partir de la zone de liaison (27, 40, 47, 56, 58) du dispositif de distribution (17).

12. Conditionnement selon l'une quelconque des revendications précédentes, dans lequel le dispositif de distribution comprend un élément élastique (62) qui est en contact avec la surface inférieure (9) du sachet (3).

13. Utilisation d'un dispositif de distribution (17) pour assembler un conditionnement selon l'une quelconque des revendications précédentes, ledit dispositif de distribution comprenant un moyen de dégagement à partir d'un sachet flexible, un élément de base (23) ayant un deuxième orifice de distribution (25), une zone de liaison (27) qui forme un joint d'étanchéité avec la zone d'étanchéité du sachet, et un élément de fermeture (29) destiné à fermer le deuxième orifice de distribution afin de former un contact avec l'élément de base.

14. Utilisation d'un sachet flexible (3) pour assembler un conditionnement selon l'une quelconque des revendications 1 à 10, où le sachet comprend une surface supérieure (7), un orifice de distribution préformé (13) sur la surface supérieure, et un élément formant couvercle (15) recouvrant l'orifice de distribution, l'élément formant couvercle pouvant être complètement retiré de l'orifice de distribution, et une zone d'étanchéité (21) formant un contour sensiblement fermé autour de l'orifice de distribution en vue d'une fixation libérable à un dispositif de distribution (17) sensiblement rigide.
